# FASCICULE DE BREVET EUROPEEN

(11) **EP 3 449 394 B1**
(45) Date de publication et mention de la délivrance du brevet: **15.12.2021**
(21) Numéro de dépôt: 17726132.8
(22) Date de dépôt: 25.04.2017
(51) Int. Cl.: G06F 16/22, G06F 12/02

(54) **SYSTEME DE BASE DE DONNEES**
DATENBANKSYSTEM
DATABASE SYSTEM

(30) Priorité: 25.04.2016 FR 1653621
(43) Date de publication de la demande: 06.03.2019
(73) Titulaire: Intersec, 92085 Paris La Defense Cedex (FR)
(72) Inventeur: BRUNEAU, Florent, 78955 Carrières sous Poissy (FR); COÏC, Jean-Marc, Bourg la Reine 92340 (FR)
(74) Mandataire: Cabinet Netter
(86) Numéro de dépôt international: PCT/FR2017/050977
(87) Numéro de publication internationale: WO 2017/187081

(56) Documents cités:
- OSMAN RASHA ET AL: "Modelling Replication in NoSQL Datastores", 8 septembre 2014 (2014-09-08), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 194 - 209, XP047297328, ISSN: 0302-9743 ISBN: 978-3-540-76785-5 figure 2 page 195 - page 196
- GU YUNHUA ET AL: "Analysis of data replication mechanism in NoSQL database MongoDB", 2015 IEEE INTERNATIONAL CONFERENCE ON CONSUMER ELECTRONICS - TAIWAN, IEEE, 6 June 2015 (2015-06-06), pages 66-67, XP033208202, DOI: 10.1109/ICCE-TW.2015.7217033 [retrieved on 2015-08-20]

## Description

L'invention concerne le domaine des bases de données, et en particulier leurs applications temps réel à grande échelle.

Un exemple est la gestion des bases de données des opérateurs de téléphonie mobile. En effet, ces derniers gèrent en permanence une quantité extrêmement importante de données concernant des lignes téléphoniques d'abonnés. Chaque ligne téléphonique génère de nombreux événements de nature passive comme des connexions, déconnexions, changements de cellule, enregistrement auprès des stations de base, etc. Un opérateur mobile à typiquement entre 5 et 25 millions d'abonnés, ce qui représente une base de données dont la taille est comprise entre plusieurs dizaines de gigabits et plusieurs térabits.

La fourniture de services dans ce contexte, même basiques, nécessite de pouvoir accéder à l'ensemble des données relatives aux lignes et à traiter ces données de diverses manières en temps réel. Cela est encore plus complexe lorsqu'il s'agit d'offrir des services de type promotionnel, c'est-à-dire accorder des bonus prédéterminés a des abonnés en fonction de leur consommation, ou lorsqu'il s'agit d'analyser en temps réel le comportement des abonnés sur une zone donnée afin de reconfigurer les ressources pour s'adapter aux besoins.

Des solutions généralement retenues pour faire face à ces défis impliquent l'utilisation de systèmes de bases de données toujours plus puissants, basés sur des grappes de dimensions toujours plus importantes, et qui ont maintenant atteint leurs limites.

L'article de OSMAN RASHA ET AL: "Modelling Replication in NoSQL Datastores", 8 septembre 2014 (2014-09-08), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 194 - 209, décrit un stockage avec répartition sur plusieurs nœuds.

L'article de GU YUNHUA ET AL: "Analysis of data replication mechanism in NoSQL database MongoDB", 6 juin 2015 (2015-06-06), 2015 IEEE INTERNATIONAL CONFERENCE ON CONSUMER ELECTRONICS - TAIWAN, IEEE, pages 66-6, décrit le mécanisme de réplication de données dans la base de données MongoDB comme basé une structure maître/ esclave et un ensemble de nœuds de répliques. Un ensemble de nœuds de répliques est un groupe de serveurs qui exécutent MongoDB et stockent la copie des mêmes données avec un basculement automatique et une récupération automatique des nœuds membres.

L'invention vient améliorer la situation. À cet effet, l'invention propose un système de base de données, comprenant une pluralité de dispositifs informatiques et un allocateur agencé pour répartir les données de la base de données sur les dispositifs informatiques. Les dispositifs informatiques sont chacun désignés par un indice d'hôte et comprennent chacun une mémoire vive. L'allocateur est agencé :
- pour organiser une pluralité d'espaces indexés sur chaque mémoire vive, et pour organiser une partie au moins des données de la base de données en morceaux ayant un indice de morceau,
- pour définir une pluralité de séquences distinctes entre elles comprenant chacune une pluralité de couples dont le nombre est égal au nombre de dispositifs informatiques, chaque couple associant une valeur de rang unique et un indice d'hôte,
- pour maintenir une liste des dispositifs informatiques fonctionnels au cours du temps,
- pour associer chaque morceau à une séquence de la pluralité de séquences, sur la base de la liste des dispositifs informatiques fonctionnels, de sorte que, pour deux morceaux ayant respectivement un premier indice de morceau et un deuxième indice de morceau tels que la différence entre le premier indice de morceau et le deuxième indice de morceau est égale au nombre de séquences de la pluralité de séquences, une séquence donnée de la pluralité de séquences est associée à un unique morceau dont l'indice de morceau est compris entre le premier indice de morceau et le deuxième indice de morceau,
- pour définir, pour un morceau d'indice de morceau donné, parmi la liste des dispositifs informatiques fonctionnels, un espace maître sur le dispositif informatique dont l'indice d'hôte est associé au rang le plus bas dans la séquence associée au morceau donné, l'espace maître étant choisi sur le dispositif informatique comme l'espace dont l'indice correspond à l'indice de morceau donné,
- pour définir, pour un morceau d'indice de morceau donné, parmi la liste des dispositifs informatiques fonctionnels, une pluralité d'espaces esclaves, choisis sur des dispositif informatiques de telle manière que la somme de rangs associés aux indices d'hôtes de ces dispositifs informatiques dans la séquence associée au morceau donné est minimale, chaque espace esclave étant choisi sur le dispositif informatique respectif comme l'espace dont l'indice correspond à l'indice de morceau donné,
- pour définir, parmi la pluralité d'espaces esclaves associés à un morceau donné, un ensemble d'espaces esclaves critiques et un ensemble d'espaces esclaves de tolérance, et dans lequel l'espace maître associé à un morceau donné est agencé pour confirmer l'écriture d'une donnée relative au morceau donné uniquement lorsque cette donnée a été répliquée sur l'ensemble d'espaces esclaves critiques du morceau donné.

Les dispositifs informatiques sont en outre agencés de telle sorte qu'un dispositif informatique qui reçoit un espace maître réplique les données du morceau associé sur les espaces esclaves correspondants.

Ce système est particulièrement avantageux car il permet de réaliser une base de données qui est entièrement stockée en RAM, ce qui permet d'obtenir des performances inégalées. En outre, ce stockage est réalisé de manière répartie, ce qui permet à la fois de répartir la charge sur les divers dispositifs informatiques, mais également de gérer une tolérance aux pannes.

Selon diverses variantes, le dispositif peut présenter une ou plusieurs des caractéristiques suivantes :
- l'allocateur est agencé pour définir un nombre d'espaces esclaves inférieur au nombre de dispositifs informatiques moins un ;
- l'allocateur est agencé pour définir la pluralité de séquences distinctes et pour associer chaque morceau à une séquence de la pluralité de séquences en initialisant, pour chaque indice de morceau, un indice d'hôte avec l'indice de morceau modulo le nombre de dispositifs informatiques, et en répétant autant de fois que le nombre de dispositifs informatiques une séquence dans laquelle :
   - si l'indice d'hôte est déjà associé à l'indice de morceau, redéfinir l'indice d'hôte en lui ajoutant un et en réalisant sur le nombre obtenu une opération modulo le nombre de dispositifs informatiques, jusqu'à trouver un indice d'hôte qui n'est pas déjà associé à l'indice de morceau,
   - l'indice de morceau est associé à l'indice d'hôte, et à un rang dont la valeur est tirée de l'itération de la séquence,
   - l'indice d'hôte est redéfini en lui ajoutant la valeur un ainsi que l'indice de morceau modulo le résultat de la soustraction d'un entier naturel au nombre de dispositifs informatiques, et en réalisant sur le résultat de ces additions une opération modulo le nombre de dispositifs informatiques, ledit entier naturel étant le même pour toutes les répétitions de la séquence et choisi de sorte que le nombre de dispositifs informatiques et le nombre de dispositifs informatiques moins ledit entier naturel sont premiers entre eux ; et
- l'allocateur est agencé pour définir la pluralité de séquences distinctes sur la base d'une pluralité de couples distincts associant un indice d'initialisation compris entre 0 et le nombre de dispositifs informatiques, et un indice de parcours compris entre 1 et le nombre de dispositifs informatiques moins un, chaque séquence distincte étant générée initialisant un indice d'hôte avec l'indice d'initialisation, et en répétant autant de fois que le nombre de dispositifs informatiques une séquence dans laquelle :
   - si l'indice d'hôte est déjà associé à l'indice de morceau, redéfinir l'indice d'hôte en lui ajoutant un et en réalisant sur le nombre obtenu une opération modulo le nombre de dispositifs informatiques, jusqu'à trouver un indice d'hôte qui n'est pas déjà associé à un rang,
   - l'indice d'hôte est associé à un rang dont la valeur est tirée de l'itération de la séquence,
   - l'indice d'hôte est redéfini en lui ajoutant la valeur de l'indice de parcours, et en réalisant sur le résultat de cette addition une opération modulo le nombre de dispositifs informatiques.

L'invention concerne également un procédé de gestion de base de données, comprenant la répartition des données de la base de données sur une pluralité de dispositifs informatiques, comprenant les opérations suivantes :
(a) associer un indice d'hôte à chaque dispositif informatique,
(b) organiser une pluralité d'espaces indexés sur la mémoire vive de chaque dispositif informatique,
(c) organiser une partie au moins des données de la base de données en morceaux ayant un indice de morceau,
(d) définir une pluralité de séquences distinctes entre elles comprenant chacune une pluralité de couples dont le nombre est égal au nombre de dispositifs informatiques, chaque couple associant une valeur de rang unique et un indice d'hôte,
(e) associer chaque morceau à une séquence de la pluralité de séquences, sur la base de la liste des dispositifs informatiques fonctionnels, de sorte que, pour deux morceaux ayant respectivement un premier indice de morceau et un deuxième indice de morceau tels que la différence entre le premier indice de morceau et le deuxième indice de morceau est égale au nombre de séquences de la pluralité de séquences, une séquence donnée de la pluralité de séquences est associée à un unique morceau dont l'indice de morceau est compris entre le premier indice de morceau et le deuxième indice de morceau, en
   (e1) définissant, pour un morceau d'indice de morceau donné, parmi la liste des dispositifs informatiques fonctionnels, un espace maître sur le dispositif informatique dont l'indice d'hôte est associé au rang le plus bas dans la séquence associée au morceau donné, l'espace maître étant choisi sur le dispositif informatique comme l'espace dont l'indice correspond à l'indice de morceau donné,
   (e2) définissant, pour un morceau d'indice de morceau donné, parmi la liste des dispositifs informatiques fonctionnels, une pluralité d'espaces esclaves, choisis sur des dispositif informatiques de telle manière que la somme de rangs associés aux indices d'hôtes de ces dispositifs informatiques dans la séquence associée au morceau donné est minimale, chaque espace esclave étant choisi sur le dispositif informatique respectif comme l'espace dont l'indice correspond à l'indice de morceau donné,
(f) stocker les données de chaque morceau donné sur l'espace maître qui lui est associé,
(g) répliquer les données stockées sur les espaces maîtres sur les espaces esclaves correspondants.

Dans le procédé de l'invention, l'opération (e2) comprend la définition, parmi la pluralité d'espaces esclaves associés à un morceau donné, un ensemble d'espaces esclaves critiques et un ensemble d'espaces esclaves de tolérance, et comprend en outre l'opération :
(h) confirmer l'écriture d'une donnée relative à un morceau donné uniquement lorsque l'espace maître associé au morceau donné a répliqué cette donnée sur l'ensemble d'espaces esclaves critiques du morceau donné.

Ce procédé peut comprendre l'une ou plusieurs des caractéristiques suivantes :
- l'opération (e2) comprend la définition d'un nombre d'espaces esclaves inférieur au nombre de dispositifs informatiques moins un ;
- les opérations (d) et (e) sont réalisées :
- en initialisant, pour chaque indice de morceau, un indice d'hôte avec l'indice de morceau modulo le nombre de dispositifs informatiques, et
- en répétant autant de fois que le nombre de dispositifs informatiques une séquence dans laquelle :
   - si l'indice d'hôte est déjà associé à l'indice de morceau, redéfinir l'indice d'hôte en lui ajoutant un et en réalisant sur le nombre obtenu une opération modulo le nombre de dispositifs informatiques, jusqu'à trouver un indice d'hôte qui n'est pas déjà associé à l'indice de morceau,
   - l'indice de morceau est associé à l'indice d'hôte, et à un rang dont la valeur est tirée de l'itération de la séquence,
   - l'indice d'hôte est redéfini en lui ajoutant la valeur un ainsi que l'indice de morceau modulo le résultat de la soustraction d'un entier naturel au nombre de dispositifs informatiques, et en réalisant sur le résultat de ces additions une opération modulo le nombre de dispositifs informatiques, ledit entier naturel étant le même pour toutes les répétitions de la séquence et choisi de sorte que le nombre de dispositifs informatiques et le nombre de dispositifs informatiques moins ledit entier naturel sont premiers entre eux ; et
- l'opération (d) comprend :
   (d1) définir une pluralité de couples distincts associant un indice d'initialisation compris entre 0 et le nombre de dispositifs informatiques, et un indice de parcours compris entre 1 et le nombre de dispositifs informatiques moins un,
   (d2) pour chaque couple distinct, initialiser un indice d'hôte avec l'indice d'initialisation, et répéter autant de fois que le nombre de dispositifs informatiques les opérations suivantes :
      (d21) si l'indice d'hôte est déjà associé à l'indice de morceau, redéfinir l'indice d'hôte en lui ajoutant un et en réalisant sur le nombre obtenu une opération modulo le nombre de dispositifs informatiques, jusqu'à trouver un indice d'hôte qui n'est pas déjà associé à un rang,
      (d22) associer l'indice d'hôte à un rang dont la valeur est tirée du nombre de répétitions de l'opération (d2) déjà réalisées pour le couple distinct courant ; et
      (d23) redéfinir l'indice d'hôte en lui ajoutant la valeur de l'indice de parcours, et en réalisant sur le résultat de cette addition une opération modulo le nombre de dispositifs informatiques.

L'invention concerne enfin un produit de programme d'ordinateur comprenant des portions de code de programme pour mettre en œuvre le dispositif ou le procédé décrits plus haut lorsque ledit programme est exécuté sur un ordinateur.

D'autres caractéristiques et avantages de l'invention apparaîtront mieux à la lecture de la description qui suit, tirée d'exemples donnés à titre illustratif et non limitatif, tirés des dessins sur lesquels :
- la figure 1 représente un système de base de données selon invention dans son environnement,
- la figure 2 représente un exemple d'une fonction mise en œuvre par l'allocateur de la figure 1, et
- la figure 3 représente un exemple d'affectation de morceaux à des espaces selon invention.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

La présente description est de nature à faire intervenir des éléments susceptibles de protection par le droit d'auteur et/ou le copyright. Le titulaire des droits n'a pas d'objection à la reproduction à l'identique par quiconque du présent document de brevet ou de sa description, telle qu'elle apparaît dans les dossiers officiels. Pour le reste, il réserve intégralement ses droits.

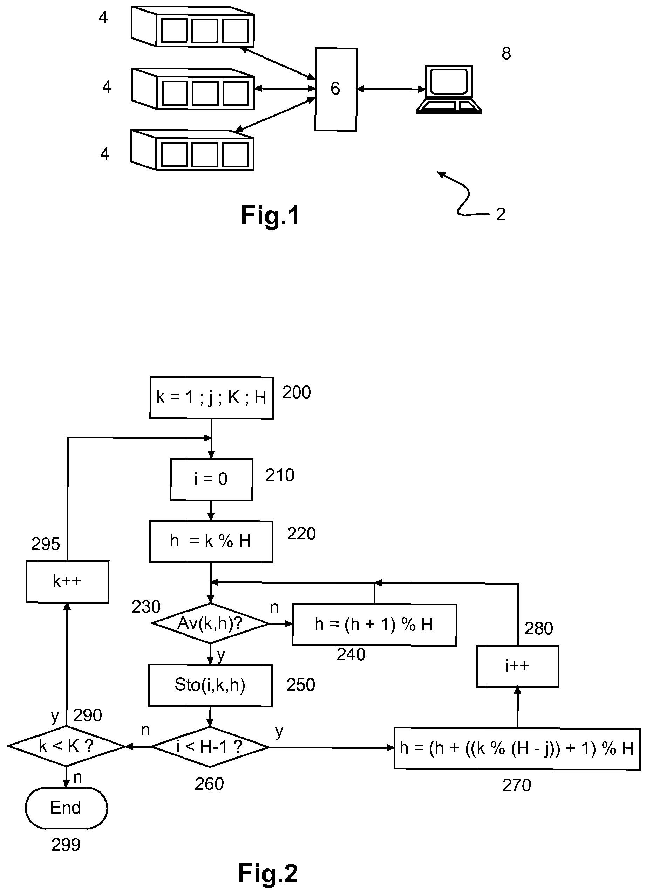

La figure 1 représente un système de base de données 2 selon l'invention dans son environnement. Dans l'exemple décrit ici, le système 2 comprend une pluralité de dispositifs informatiques 4, un allocateur 6 et un terminal 8. Le terminal 8 permet dans l'exemple décrit ici d'offrir des services de gestion de données d'abonnés de téléphonie mobile, par exemple pour mettre en place des processus de bonus de consommation automatique en fonction du comportement des abonnés. Pour cela, le terminal 8 accède à la base de données de téléphonie mobile qui est stockée sur les dispositifs informatiques 4 et dont la répartition est gérée par l'allocateur 6. Plus précisément, allocateur 6 a pour fonction la répartition des données de la base de données sur les mémoires vives des dispositifs informatiques 4 et l'interactions avec le terminal 8 pour garantir qu'une donnée modifiée a bien été enregistrée dans la base de données et a fait l'objet d'un nombre suffisant de réplications.

Les dispositifs informatiques 4 peuvent être tout dispositif informatique propre à être mis en œuvre dans un réseau de dispositifs gérés par l'allocateur 6. Il peut s'agir d'un ordinateur classique, d'un ordinateur sous forme de lame, ou de tout autre appareil informatique dont la mémoire vive peut être adressée par l'allocateur 6. Par mémoire vive, on entend toute mémoire présentant un temps d'accès inférieur à 100ns. Les dispositifs informatiques 4 peuvent être utilisés à de pures fins de stockage, c'est-à-dire que l'allocateur 6 les commandes entièrement et exclusivement pour le stockage des données de la base de données. En variante, les dispositifs informatiques 4 peuvent également être utilisés comme ressources de calcul aux fins des applications sur la base de données.

L'allocateur 6 peut être réalisé sous la forme d'un code informatique exécuté sur un ou plusieurs processeurs. Par processeurs, il doit être compris tout processeur adapté aux calculs décrit plus bas. Un tel processeur peut être réalisé de toute manière connue, sous la forme d'un microprocesseur pour ordinateur personnel, d'une puce dédiée de type FPGA ou SoC (« system on chip » en anglais), d'une ressource de calcul sur une grille, d'un microcontrôleur, ou de toute autre forme propre à fournir la puissance de calcul nécessaire à la réalisation décrite plus bas. Un ou plusieurs de ces éléments peuvent également être réalisés sous la forme de circuits électroniques spécialisés tel un ASIC. Une combinaison de processeur et de circuits électroniques peut également être envisagée. L'allocateur 6 peut également être mis en œuvre sur un ou plusieurs des dispositifs informatiques 4.

Comme cela sera explicité avec la figure 2, l'allocateur 6 organise les données de la base de données en une pluralité de morceaux indexés. Cela signifie que certaines lignes sont contenues dans un premier morceau, d'autres dans un deuxième morceau, etc. Cela peut également être réalisé table par table, ou par un mélange de ces deux possibilités. Ce découpage est unique, de sorte qu'une donnée particulière de la base de données est située dans un seul et unique morceau. Dans l'exemple décrit ici, l'allocateur 6 organise la totalité de la base de données. En variante, l'allocateur 6 peut organiser une partie seulement de la base de données comme décrit plus bas, et stocker le reste de la base de données d'une manière différente. De la même manière qu'il organise la base de données, l'allocateur 6 organise les mémoires vives des dispositifs informatiques 4. Ainsi, l'allocateur 6 peut accéder à une pluralité d'espaces indexés qui désignent chacun une partie d'une mémoire vive sur les dispositifs informatiques 4. Ici aussi, cet indexage est unique, de sorte qu'un espace donné correspond à une unique portion d'une mémoire vive d'un dispositif informatique 4.

Ainsi, l'allocateur 6 organise la réplication d'une manière très spécifique les morceaux indexés de la base de données sur les espaces indexés des mémoires vives des dispositifs informatiques 4. La réplication est d'autant plus importante que les mémoires vives, si elles offrent des performances inégalées pour la rapidité et la capacité de traitement des données, sont particulièrement sensibles aux pannes. En effet, elles ne sont pas capables de maintenir les données qu'elles contiennent si le dispositif informatique 4 qui les reçoit n'est pas alimenté. Ainsi, si pour une quelconque raison un dispositif informatique 4 interrompt son fonctionnement, que ce soit à cause d'une panne système ou d'une panne électrique, les données contenues dans la mémoire vive de ce dispositif informatique 4 seront perdues, et la base de données risque d'être incomplète et/ou corrompue.

De plus, afin d'optimiser les performances du système de base de données 2, il peut être intéressant de dimensionner le nombre de dispositifs informatiques 4 et la mémoire vive qu'ils embarquent en fonction des opérations recherchées. En effet, il est important d'équilibrer la charge sur l'ensemble du système de bases de données 2, tant pour un usage instantané et courant que pour une récupération en cas de panne. En répartissant de manière intelligente les morceaux sur les espaces, la performance du système de base de données 2 peut être optimisée lors d'un fonctionnement normal. Mais cette répartition doit également tenir compte des cas exceptionnels, comme la perte d'un dispositif informatique 4 donné, et la nécessité d'utiliser des espaces contenant des réplicas pour fonctionner. Ces opérations sont d'autant plus complexes que, dans le cas d'une base de données stockée de manière répartie sur des mémoires vives, les risques de panne sont plus importants que dans les systèmes de stockage de base de données classique.

Ainsi, l'allocateur 6 définit pour chaque morceau de la base de données un espace qui est qualifié de maître et une pluralité d'espaces sont qualifiés d'esclaves. L'espace maître sera celui qui sera appelé par le terminal 8 pour toute opération de lecture ou d'écriture de la base de données pour le morceau concerné. Une fois les données stockées sur l'espace maître, l'allocateur 6 organise la réplication des données sur l'ensemble des espaces esclaves, dans un ordre indiqué par un rang respectif associé à chacun des espaces esclaves.

Selon l'invention, l'allocateur 6 détermine de manière absolue les morceaux de la base de données qui sont accessibles à un instant donné. Pour cela, l'allocateur 6 détermine qu'un morceau donné de la base de données n'est accessible que s'il est présent sur un espace maître et sur au moins un nombre minimum d'espaces esclaves. Dans l'exemple décrit ici, ce nombre est en général égal à 1 ou 2. De la même manière, l'écriture d'une donnée n'est confirmée que lorsque celle-ci a été répliquée au moins dans le nombre minimum d'espaces esclaves. Ces espaces esclaves seront appelés espaces esclaves critiques dans la suite.

En outre, l'allocateur 6 peut également fixer un nombre maximum d'espaces esclaves inférieur au nombre de dispositifs informatiques 4. Dans l'exemple décrit ici, le nombre maximum d'espaces esclaves est en général choisi égal au nombre minimum d'espaces esclaves ajouté de 1 ou 2. Dans ce cas, pour un morceau donné, le système de base de données 2 est capable de tolérer la perte d'un nombre de dispositifs informatiques 4 recevant un espace (maître ou esclave) stockant le morceau donné égal au nombre maximum moins le nombre minimum d'espaces esclaves. Les espaces esclaves au-delà du nombre minimum d'espaces esclaves seront appelés espace esclaves de tolérance dans la suite.

La figure 2 représente un exemple d'une fonction mise en œuvre par l'allocateur 6 pour affecter les morceaux à des espaces et déterminer un rang pour les espaces. Cette fonction est mise en œuvre à l'initialisation du système de base de données 2, ainsi qu'à chaque fois qu'un dispositif est ajouté ou retiré de manière définitive, c'est-à-dire à chaque fois que l'architecture des dispositifs informatiques 4 utilisés change de manière non temporaire.

Dans une opération 200, un indice de morceau k est initialisé avec la valeur 1, un nombre entier j qui est fixé pour toutes les exécutions de cette fonction est reçu, ainsi qu'un nombre de morceaux K et un nombre de dispositifs informatiques H.

Dans une opération 210, une boucle est lancée avec l'initialisation à 1 d'un indice d'itération de boucle i. Cette boucle a pour fonction l'attribution d'un rang à chacun des espaces dont l'indice dans les mémoires vives des dispositifs informatiques 4 est égal à l'indice de morceau k courant.

La boucle est également initialisée avec une opération 220 dans laquelle un indice d'hôte h est initialisé avec la valeur correspondant l'indice de morceau k courant modulo le nombre de dispositifs informatiques H.

Ensuite, dans une opération 230, une fonction Av() qui reçoit comme arguments l'indice de morceau k courant et l'indice d'hôte h est exécutée. Cette fonction détermine si l'espace d'indice k dans le dispositif informatique 4 d'indice h est déjà associé à un morceau. Si c'est le cas, alors l'indice d'hôte h est mis à jour dans une opération 240, et l'opération 230 est répétée jusqu'à trouver un espace libre. Dans l'opération 240, l'indice d'hôte h est mis à jour avec la valeur correspondant à l'indice h ajouté de 1 modulo le nombre de dispositifs informatiques H.

Ainsi, lorsqu'un nouveau dispositif informatique 4 est ajouté comme ressource, ou lorsqu'un dispositif informatique 4 redevient accessible suite à une panne, seuls les espaces qui n'ont pas un morceau qui leur est attribué se voient mis à jour.

Une fois qu'un espace libre a été déterminé, une fonction Sto() recevant comme arguments l'indice d'itération de boucle i, l'indice de morceau k courant, et l'indice d'hôte h est exécutée. La fonction Sto() associe le morceau d'indice k courant à l'espace d'indice k sur le dispositif informatique 4 d'indice h, et affecte à cet espace un rang égal à l'indice d'itération de boucle i. Ainsi, lorsque le rang 0 est attribué à un espace, celui-ci est l'espace maître pour le morceau d'indice k. Les autres itérations associent des espaces esclaves critiques ou de tolérance. La copie, la mise à jour et/ou la réplication des données d'un morceau donné sur un espace nouvellement associé à ce morceau peut être réalisée dès l'affectation du rang ou différée dans le temps.

Ensuite, l'indice d'itération de boucle i est comparé au nombre de dispositifs informatiques H-1 dans une opération 260 pour déterminer si tous les espaces d'indice k courant ont été associés au morceau d'indice k courant. Lorsqu'il reste des espaces à associer, l'indice d'hôte h est mis à jour dans une opération 270, l'indice d'itération de boucle i est incrémenté dans une opération 280, et la boucle reprend avec l'opération 230. Dans l'opération 270, l'indice d'hôte h courant est ajouté d'une valeur égale à 1 ajouté de l'indice de morceau k courant modulo la différence entre le nombre de dispositifs informatiques H et le nombre entier j, le tout modulo le nombre de dispositifs informatiques H.

Selon l'invention, le nombre entier j est choisi de sorte que le nombre de dispositifs informatiques H et le nombre de dispositifs informatiques H retiré du nombre entier j sont premiers entre eux.

La Demanderesse a découvert que cette formule est particulièrement avantageuse car elle offre une répartition de rang statique et indépendante de l'état des morceaux. Ainsi, la mise à jour en temps réel ne nécessite que la liste des dispositifs informatiques 4 disponibles ainsi que l'état de réplication des morceaux, sans qu'il soit nécessaire de tenir compte de la charge des dispositifs informatiques 4.

La Demanderesse a également découvert que les résultats les meilleurs étaient obtenus en fixant j égal à 1. En effet, selon l'invention, l'allocateur définit H*(H-j) séquences d'affectation de rangs distinctes. Donc, lorsque K est supérieur à H*(H-j), certaines séquences d'affectation de rangs vont être répétées, et la perte d'un dispositif informatique 4 donné affectera plusieurs morceaux pour lesquels un espace maître ou esclave était affecté à celui-ci. En fixant j égal à 1, il est possible de maximiser la valeur H*(H-j) et donc augmenter la résilience du système de base de données 2.

De plus, cette répartition assure une haute stabilité au système de base de données 2 en permettant la désignation d'un nombre d'espaces esclaves calibré pour tolérer un nombre choisi de pannes par morceau. Cela garantit une continuité de service choisie selon les besoins de l'application, et permet également d'équilibrer la charge sur le système de base de données 2 de manière optimale en permettant de choisir de manière optimale les moments auxquels les espaces esclaves de tolérance doivent être mis à jour et/ou récupérés. En effet, il suffit que l'espace maître et les espaces esclaves critiques d'un morceau donné soient à jour pour que le morceau soit considéré comme à jour et actif. Le traitement des espaces esclaves de tolérance peut être réalisé au moment le plus important du point de vue de la charge du système de bases de données.

Enfin, cette formule garantit la stabilité de l'assignation des morceaux aux espaces, puisqu'au fur et à mesure que les dispositifs informatiques 4 sont récupérés après des pannes, ce sont toujours les mêmes espaces qui seront affectés comme espace maître, espaces esclaves critiques, et espaces esclaves de tolérance.

La Demanderesse a également découvert que des résultats encore meilleurs peuvent être obtenus lorsque le nombre de dispositifs informatiques H est un nombre premier.

Une fois que tous les espaces ont été affectés pour un indice de morceau k donné, celui-ci est comparé au nombre de morceaux K dans une opération 290. S'il reste des morceaux à associer, alors l'indice de morceau k est incrémenté dans une opération 295. Sinon la fonction se termine dans une opération 299.

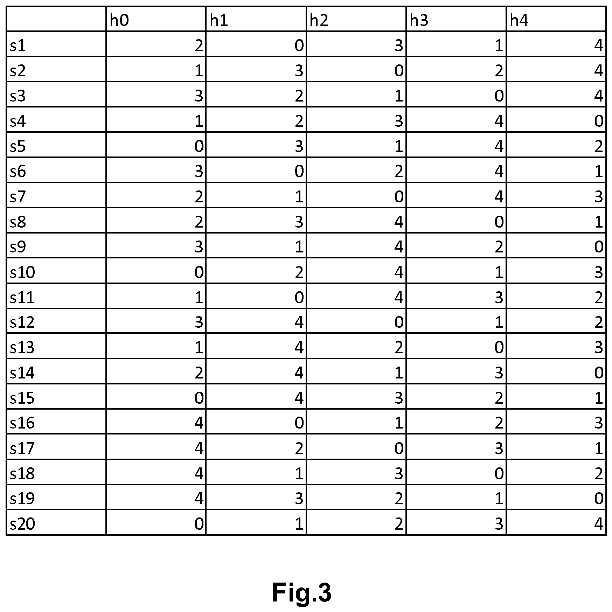

La figure 3 représente un exemple d'allocation obtenu avec la fonction de la figure 2, avec un nombre de dispositifs informatiques H égal à 5 et un nombre de morceaux K égal à 20.

Sur la base des associations réalisées avec la fonction décrite sur la figure 2, l'allocateur 6 peut initialiser le système de base de données 2 sur la base des règles suivantes :
- pour chaque morceau, l'espace de rang 0 de plus petit rang disposant d'une copie à jour des données du morceau est désigné comme espace maître,
- les r espaces accessibles de rang les plus faibles et n'ayant pas été désignés comme maître sont désignés comme espaces esclaves critiques,
- les R-r espaces accessibles de rangs suivants sont désignés comme espaces esclaves de tolérance,
- les H-R-1 espaces restants (s'ils existent) ne sont pas affectés, et pourront devenir des espaces esclaves de tolérance et/ou critiques si suffisamment de dispositifs informatiques 4 tombent en panne.

Ensuite, tous les espaces sont progressivement remplis par ordre d'importance, c'est-à-dire d'abord le maître, puis les esclaves critiques et enfin les esclaves de tolérance. Dès que l'espace maître et les espaces critiques d'un morceau donné sont remplis, le morceau correspondant est déclaré accessible au terminal 8.

C'est une étape importante, car, jusqu'à la perte d'un dispositif informatique 4, l'allocateur 6 n'intervient plus directement dans la réplication des données, le maître se chargeant de maintenir les données de ses esclaves à jour.

Lorsqu'un dispositif informatique 4 rencontre une défaillance, plusieurs cas sont possibles pour un morceau donné :
a. le dispositif informatique 4 contenait un espace non affecté,
b. le dispositif informatique 4 contenait un espace esclave de tolérance,
c. le dispositif informatique 4 contenait un espace esclave critique,
d. le dispositif informatique 4 contenait l'espace maître.

Dans le cas a., rien ne se passe, puisque cet événement est neutre par rapport à l'intégrité des données.

Dans le cas b., plusieurs solutions peuvent être mises en œuvre. Une première solution consiste, si aucun autre morceau n'est impacté par un cas c. ou d., à attendre pour voir si le dispositif informatique 4 recouvre son état, afin d'éviter des échanges de données inutiles. Une autre solution est que l'espace maître accède à une table interne au dispositif informatique 4 qui le reçoit comprenant les rangs des espaces esclaves et détermine l'espace esclave accessible de rang le plus faible pour le morceau donné. Ensuite, l'espace maître organise la réplication de ses données sur cet espace esclave. Selon une troisième solution, l'espace maître appelle l'allocateur 6 qui maintient la table des dispositifs informatiques 4 actifs et indique à l'espace maître le nouvel espace esclave pour organiser la réplication des données.

Dans le cas c., deux solutions peuvent être mises en œuvre. Selon une première solution, l'espace maître accède à une table interne au dispositif informatique 4 qui le reçoit comprenant les rangs des espaces esclaves et détermine l'espace esclave accessible de rang le plus faible pour le morceau donné. Ensuite, l'espace maître organise la réplication de ses données sur cet espace esclave. Selon la deuxième solution, l'espace maître appelle l'allocateur 6 qui maintient la table des dispositifs informatiques 4 actifs et indique à l'espace maître le nouvel espace esclave pour organiser la réplication des données. Dans le cas où aucun espace esclave n'est disponible pour répliquer les données de l'espace maître, le morceau donné est désactivé jusqu'à ce que r espaces esclaves critiques soient à nouveau à jour.

Dans le cas d., l'allocateur 6 choisit l'esclave maître parmi les espaces associés au morceau donné dont il est acquis que leurs données sont à jour en désignant celui qui présente le rang le plus faible, et les espaces esclaves se voient réattribuer leur rôle (espace esclave critique ou espace esclave de tolérance) de telle sorte que la somme des rangs des espaces esclaves sélectionnés est minimale. Pour cela, les solutions décrites en rapport avec les cas b. et c. sont mises en œuvre.

Les dispositifs informatiques 4 sont en outre agencés pour déclarer leur état régulièrement à l'allocateur 6. Ainsi, pour un morceau donné, dès qu'un espace esclave est à jour en termes de réplication de données et qu'il présente un rang inférieur à l'espace maître, l'allocateur 6 déclenche une opération similaire au cas d. afin d'assurer que l'espace maître pour le morceau donné est celui de rang le plus faible, et que les espaces esclaves sont sélectionnés pour minimiser la somme de leurs rangs.

Ainsi, les opérations d'écriture, mise à jour et/ou réplication pour chacun des espaces peuvent être réalisées sans faire appel à l'allocateur 6 dans la plupart des cas, ce dernier pouvant n'être sollicité que lorsqu'un espace maître est sur un dispositif informatique 4 connaissant une défaillance.

Un certain nombre de variantes pourra être envisagé au vu de la figure 2, par exemple en variant l'opération 220 pour changer le premier dispositif informatique 4 qui est testé. Avantageusement, de telles variantes dépendront de l'indice de morceau k courant.

Par exemple, l'allocateur 6 pourrait commencer par tirer H*H-k couples (i,j) où i est choisi entre 0 et H, et j entre 1 et H-k, puis, pour chaque série de H*(H-k) morceaux, un couple est tiré au hasard, chaque couple étant tiré une fois, et les rang sont affectés selon une séquence du type :
- rang 0 affecté à l'espace de l'hôte d'indice i,
- rangs suivants affectés en répétant la formule h = (h+j) modulo H (à la place de l'opération 270, en évitant les espaces auxquels un rang a déjà été affecté comme avec l'opération 240).

Selon cette variante, les mêmes séquences d'affectation de rangs seront réalisées qu'avec la figure 5, mais dans un ordre dépendant de l'ordre de tirage des couples (i,j).

D'autres variantes pourront être envisagées dès lors qu'elles permettent d'obtenir une répartition équilibrée et cyclique sur H*(H-j) morceaux.

## Revendications

1. Système de base de données, comprenant une pluralité de dispositifs informatiques (4) et un allocateur (6) agencé pour répartir les données de la base de données sur les dispositifs informatiques (4), **caractérisé en ce que** les dispositifs informatiques (4) sont chacun désignés par un indice d'hôte et comprennent chacun une mémoire vive,
**en ce que** l'allocateur (6) est agencé :
- pour organiser une pluralité d'espaces indexés sur chaque mémoire vive, et pour organiser une partie au moins des données de la base de données en morceaux ayant un indice de morceau,
- pour définir une pluralité de séquences distinctes entre elles comprenant chacune une pluralité de couples dont le nombre est égal au nombre de dispositifs informatiques (4), chaque couple associant une valeur de rang unique et un indice d'hôte,
- pour maintenir une liste des dispositifs informatiques (4) fonctionnels au cours du temps,
- pour associer chaque morceau à une séquence de la pluralité de séquences, sur la base de la liste des dispositifs informatiques (4) fonctionnels, de sorte que, pour deux morceaux ayant respectivement un premier indice de morceau et un deuxième indice de morceau tels que la différence entre le premier indice de morceau et le deuxième indice de morceau est égale au nombre de séquences de la pluralité de séquences, une séquence donnée de la pluralité de séquences est associée à un unique morceau dont l'indice de morceau est compris entre le premier indice de morceau et le deuxième indice de morceau,
- pour définir, pour un morceau d'indice de morceau donné, parmi la liste des dispositifs informatiques (4) fonctionnels, un espace maître sur le dispositif informatique (4) dont l'indice d'hôte est associé au rang le plus bas dans la séquence associée au morceau donné, l'espace maître étant choisi sur le dispositif informatique (4) comme l'espace dont l'indice correspond à l'indice de morceau donné,
- pour définir, pour un morceau d'indice de morceau donné, parmi la liste des dispositifs informatiques (4) fonctionnels, une pluralité d'espaces esclaves, choisis sur des dispositif informatiques (4) de telle manière que la somme de rangs associés aux indices d'hôtes de ces dispositifs informatiques (4) dans la séquence associée au morceau donné est minimale, chaque espace esclave étant choisi sur le dispositif informatique (4) respectif comme l'espace dont l'indice correspond à l'indice de morceau donné,
- pour définir, parmi la pluralité d'espaces esclaves associés à un morceau donné, un ensemble d'espaces esclaves critiques et un ensemble d'espaces esclaves de tolérance, et **en ce que** les dispositifs informatiques (4) sont en outre agencés de telle sorte qu'un dispositif informatique (4) qui reçoit un espace maître réplique les données du morceau associé sur les espaces esclaves correspondants, et confirme l'écriture d'une donnée relative à un morceau donné uniquement lorsque cette donnée a été répliquée sur l'ensemble d'espaces esclaves critiques du morceau donné.

2. Système selon la revendication 1, dans lequel l'allocateur (6) est agencé pour définir un nombre d'espaces esclaves inférieur au nombre de dispositifs informatiques (4) moins un.

3. Système selon la revendication 1, dans lequel l'allocateur (6) est agencé pour définir la pluralité de séquences distinctes et pour associer chaque morceau à une séquence de la pluralité de séquences en initialisant, pour chaque indice de morceau, un indice d'hôte avec l'indice de morceau modulo le nombre de dispositifs informatiques, et en répétant autant de fois que le nombre de dispositifs informatiques une séquence dans laquelle :
- si l'indice d'hôte est déjà associé à l'indice de morceau, redéfinir l'indice d'hôte en lui ajoutant un et en réalisant sur le nombre obtenu une opération modulo le nombre de dispositifs informatiques (4), jusqu'à trouver un indice d'hôte qui n'est pas déjà associé à l'indice de morceau,
- l'indice de morceau est associé à l'indice d'hôte, et à un rang dont la valeur est tirée de l'itération de la séquence,
- l'indice d'hôte est redéfini en lui ajoutant la valeur un ainsi que l'indice de morceau modulo le résultat de la soustraction d'un entier naturel au nombre de dispositifs informatiques, et en réalisant sur le résultat de ces additions une opération modulo le nombre de dispositifs informatiques (4), ledit entier naturel étant le même pour toutes les répétitions de la séquence et choisi de sorte que le nombre de dispositifs informatiques (4) et le nombre de dispositifs informatiques (4) moins ledit entier naturel sont premiers entre eux.

4. Système selon l'une des revendications 1 à 3, dans lequel l'allocateur (6) est agencé pour définir la pluralité de séquences distinctes sur la base d'une pluralité de couples distincts associant un indice d'initialisation compris entre 0 et le nombre de dispositifs informatiques (4), et un indice de parcours compris entre 1 et le nombre de dispositifs informatiques (4) moins un, chaque séquence distincte étant générée initialisant un indice d'hôte avec l'indice d'initialisation, et en répétant autant de fois que le nombre de dispositifs informatiques (4) une séquence dans laquelle :
- si l'indice d'hôte est déjà associé à l'indice de morceau, redéfinir l'indice d'hôte en lui ajoutant un et en réalisant sur le nombre obtenu une opération modulo le nombre de dispositifs informatiques (4), jusqu'à trouver un indice d'hôte qui n'est pas déjà associé à un rang,
- l'indice d'hôte est associé à un rang dont la valeur est tirée de l'itération de la séquence,
- l'indice d'hôte est redéfini en lui ajoutant la valeur de l'indice de parcours, et en réalisant sur le résultat de cette addition une opération modulo le nombre de dispositifs informatiques (4).

5. Procédé de gestion de base de données, comprenant la répartition des données de la base de données sur une pluralité de dispositifs informatiques (4), comprenant les opérations suivantes :
(a) associer un indice d'hôte à chaque dispositif informatique (4),
(b) organiser une pluralité d'espaces indexés sur la mémoire vive de chaque dispositif informatique (4),
(c) organiser une partie au moins des données de la base de données en morceaux ayant un indice de morceau,
(d) définir une pluralité de séquences distinctes entre elles comprenant chacune une pluralité de couples dont le nombre est égal au nombre de dispositifs informatiques (4), chaque couple associant une valeur de rang unique et un indice d'hôte,
(e) associer chaque morceau à une séquence de la pluralité de séquences, sur la base de la liste des dispositifs informatiques (4) fonctionnels, de sorte que, pour deux morceaux ayant respectivement un premier indice de morceau et un deuxième indice de morceau tels que la différence entre le premier indice de morceau et le deuxième indice de morceau est égale au nombre de séquences de la pluralité de séquences, une séquence donnée de la pluralité de séquences est associée à un unique morceau dont l'indice de morceau est compris entre le premier indice de morceau et le deuxième indice de morceau, en
(e1) définissant, pour un morceau d'indice de morceau donné, parmi la liste des dispositifs informatiques (4) fonctionnels, un espace maître sur le dispositif informatique (4) dont l'indice d'hôte est associé au rang le plus bas dans la séquence associée au morceau donné, l'espace maître étant choisi sur le dispositif informatique (4) comme l'espace dont l'indice correspond à l'indice de morceau donné,
(e2) définissant, pour un morceau d'indice de morceau donné, parmi la liste des dispositifs informatiques (4) fonctionnels, une pluralité d'espaces esclaves, choisis sur des dispositif informatiques (4) de telle manière que la somme de rangs associés aux indices d'hôtes de ces dispositifs informatiques (4) dans la séquence associée au morceau donné est minimale, chaque espace esclave étant choisi sur le dispositif informatique (4) respectif comme l'espace dont l'indice correspond à l'indice de morceau donné, et, parmi la pluralité d'espaces esclaves, définir un ensemble d'espaces esclaves critiques et un ensemble d'espaces esclaves de tolérance,
(f) stocker les données de chaque morceau donné sur l'espace maître qui lui est associé,
(g) répliquer les données stockées sur les espaces maîtres sur les espaces esclaves correspondants, et
(h) confirmer l'écriture d'une donnée relative à un morceau donné uniquement lorsque l'espace maître associé au morceau donné a répliqué cette donnée sur l'ensemble d'espaces esclaves critiques du morceau donné.

6. Procédé selon la revendication 5, dans lequel l'opération (e2) comprend la définition d'un nombre d'espaces esclaves inférieur au nombre de dispositifs informatiques (4) moins un.

7. Procédé selon l'une des revendications 5 et 6, dans lequel les opérations (d) et (e) sont réalisées :
- en initialisant, pour chaque indice de morceau, un indice d'hôte avec l'indice de morceau modulo le nombre de dispositifs informatiques, et
- en répétant autant de fois que le nombre de dispositifs informatiques une séquence dans laquelle :
- si l'indice d'hôte est déjà associé à l'indice de morceau, redéfinir l'indice d'hôte en lui ajoutant un et en réalisant sur le nombre obtenu une opération modulo le nombre de dispositifs informatiques (4), jusqu'à trouver un indice d'hôte qui n'est pas déjà associé à l'indice de morceau,
- l'indice de morceau est associé à l'indice d'hôte, et à un rang dont la valeur est tirée de l'itération de la séquence,
- l'indice d'hôte est redéfini en lui ajoutant la valeur un ainsi que l'indice de morceau modulo le résultat de la soustraction d'un entier naturel au nombre de dispositifs informatiques, et en réalisant sur le résultat de ces additions une opération modulo le nombre de dispositifs informatiques (4), ledit entier naturel étant le même pour toutes les répétitions de la séquence et choisi de sorte que le nombre de dispositifs informatiques (4) et le nombre de dispositifs informatiques (4) moins ledit entier naturel sont premiers entre eux.

8. Procédé selon l'une des revendications 5 à 7, dans lequel l'opération (d) comprend :
(d1) définir une pluralité de couples distincts associant un indice d'initialisation compris entre 0 et le nombre de dispositifs informatiques (4), et un indice de parcours compris entre 1 et le nombre de dispositifs informatiques (4) moins un,
(d2) pour chaque couple distinct, initialiser un indice d'hôte avec l'indice d'initialisation, et répéter autant de fois que le nombre de dispositifs informatiques les opérations suivantes :
(d21) si l'indice d'hôte est déjà associé à l'indice de morceau, redéfinir l'indice d'hôte en lui ajoutant un et en réalisant sur le nombre obtenu une opération modulo le nombre de dispositifs informatiques (4), jusqu'à trouver un indice d'hôte qui n'est pas déjà associé à un rang,
(d22) associer l'indice d'hôte à un rang dont la valeur est tirée du nombre de répétitions de l'opération (d2) déjà réalisées pour le couple distinct courant,
(d23) redéfinir l'indice d'hôte en lui ajoutant la valeur de l'indice de parcours, et en réalisant sur le résultat de cette addition une opération modulo le nombre de dispositifs informatiques (4).

9. Produit de programme d'ordinateur comprenant des portions de code de programme pour mettre en œuvre le dispositif selon l'une des revendications 1 à 5 ou le procédé selon l'une des revendications 5 à 8 lorsque ledit programme est exécuté sur un ordinateur.

## Patentansprüche

1. Ein Datenbanksystem, das eine Vielzahl von Rechengeräten (4) und einen Zuweiser (6) umfasst, der angeordnet ist, um Datenbankdaten an die Rechengeräte (4) zu verteilen, **dadurch gekennzeichnet, dass** die Rechengeräte (4) jeweils durch einen Host-Index bezeichnet werden und jeweils einen Arbeitsspeicher umfassen, und dass der Zuweiser (6) angeordnet ist:
- um eine Vielzahl von indexierten Speicherplätzen auf jedem Arbeitsspeicher einzurichten, und um mindestens einige der Daten in der Datenbank in Chunks mit einem Chunk-Index einzurichten,
- um eine Vielzahl von untereinander verschiedenen Sequenzen zu bestimmen, die jeweils eine Vielzahl von Paaren umfassen, deren Anzahl gleich der Anzahl der Rechengeräte (4) ist, wobei jedes Paar einen einzigen Rangwert und einen Host-Index zuordnet,
- um eine Liste der funktionale Rechengeräte (4) im Laufe der Zeit zu unterhalten,
- um jeden Chunk mit einer der Vielzahl von Sequenzen zu verknüpfen, basierend auf der Liste der funktionalen Rechengeräte (4), in der Art und Weise, dass für zwei Chunks, die jeweils einen solchen ersten Chunk-Index und einen solchen zweiten Chunk-Index haben, dass die Differenz zwischen dem ersten Chunk-Index und dem zweiten Chunk-Index gleich der Anzahl von Sequenzen der Vielzahl von Sequenzen ist, eine gegebene Sequenz der Vielzahl von Sequenzen mit einem einzigen Chunk verknüpft wird, dessen Chunk-Index zwischen dem ersten Chunk-Index und dem zweiten Chunk-Index liegt,
- um für einen Chunk mit gegebenem Chunk-Index aus der Liste der funktionalen Rechengeräte (4) einen Hauptspeicherplatz auf dem Rechengerät (4) zu bestimmen, dessen Host-Index dem niedrigsten Rang in der dem gegebenen Chunk zugeordneten Sequenz zugeordnet ist, wobei der Hauptspeicherplatz auf dem Rechengerät (4) als der Platz ausgewählt wird, dessen Index dem gegebenen Chunk-Index entspricht,
- um für einen Chunk mit gegebenem Chunk-Index aus der Liste der funktionalen Rechengeräte (4) eine Vielzahl von Nebenspeicherplätzen zu bestimmen, die auf Rechengeräten (4) so ausgewählt werden, dass die Summe von Rängen, die mit den Host-Indizes dieser Rechengeräte (4) in der dem gegebenen Chunk zugeordneten Sequenz verbunden sind, minimal ist, wobei jeder Nebenspeicherplatz auf dem jeweiligen Rechengerät (4) als der Platz ausgewählt wird, dessen Index dem gegebenen Chunk-Index entspricht,
- um unter der Vielzahl der einem gegebenen Chunk zugeordneten Nebenspeicherplätze einen Satz von kritischen Nebenspeicherplätzen und einen Satz von Toleranz-Nebenspeicherplätzen zu bestimmen, und dass die Rechengeräte (4) ferner so angeordnet sind, dass ein Rechengerät (4), das einen Hauptspeicherplatz empfängt, die Daten des zugeordneten Chunks auf die entsprechenden Nebenspeicherplätze repliziert und das Schreiben eines Datums, das sich auf einen gegebenen Chunk bezieht, nur dann bestätigt, wenn dieses Datum auf den Satz von kritischen Nebenspeicherplätzen des gegebenen Chunk repliziert worden sind.

2. System nach Anspruch 1, wobei der Zuweiser (6) so eingerichtet ist, dass er eine Anzahl von Nebenspeicherplätzen bestimmt, die kleiner ist als die Anzahl der Rechengeräte (4) minus eins.

3. System nach Anspruch 1, bei dem der Zuweiser (6) so angeordnet ist, dass er die Vielzahl unterschiedlicher Sequenzen bestimmt und jeden Chunk einer der Vielzahl von Sequenzen zuordnet, indem er für jeden Chunk-Index einen Host-Index mit dem Chunk-Index modulo der Anzahl der Rechengeräte initialisiert und so oft wie die Anzahl der Rechengeräte eine Sequenz wiederholt, in welcher:
- wenn der Host-Index bereits mit dem Chunk-Index verknüpft ist, den Host-Index neu bestimmen, indem ihm eins addiert wird und an der sich ergebenden Anzahl eine Modulo-Rechnung Rechengeräte (4) durchgeführt wird, bis ein Host-Index gefunden wird, der nicht bereits mit dem Chunk-Index verknüpft ist,
- der Chunk-Index mit dem Host-Index und mit einem Rang verbunden ist, dessen Wert aus der Iteration der Sequenz stammt,
- der Host-Index neu bestimmt wird, indem ihm der Wert eins addiert sowie der Chunk-Index modulo Ergebnis der Subtraktion einer natürlichen Zahl von der Anzahl der Rechengeräte, und indem am Ergebnis dieser Additionen eine Modulo-Rechnung Anzahl der Rechengeräte (4) durchgeführt wird, wobei die natürliche Zahl für alle Wiederholungen der Sequenz gleich ist und so gewählt wird, dass die Anzahl der Rechengeräte (4) und die Anzahl der Rechengeräte (4) minus der natürlichen Zahl primär zueinander sind.

4. System nach einem der Ansprüche 1 bis 3, wobei der Zuweiser (6) so angeordnet ist, dass er die Vielzahl unterschiedlicher Sequenzen auf der Grundlage einer Vielzahl unterschiedlicher Paare bestimmt, die einen Initialisierungsindex zwischen 0 und der Anzahl der Rechengeräte (4) und ein Pfadindex zwischen 1 und der Anzahl der Rechengeräte (4) minus eins zuordnet, wobei jede unterschiedliche Sequenz erzeugt wird, indem ein Host-Index mit dem Initialisierungsindex initialisiert wird und indem eine Sequenz so oft wie die Anzahl der Rechengeräte (4) wiederholt wird, bei der:
- wenn der Host-Index bereits mit dem Chunk-Index verknüpft ist, den Host-Index neu bestimmen, indem ihm eins addiert wird und an der sich ergebenden Anzahl eine Modulo-Rechnung Recheneinheiten (4) durchgeführt wird, bis ein Host-Index gefunden wird, der nicht bereits mit einem Rang verknüpft ist,
- der Host-Index ist mit einem Rang verbunden, dessen Wert aus der Iteration der Sequenz stammt,
- der Host-Index wird neu bestimmt, indem ihm der Wert des Pfad-Index addiert wird und am Ergebnis dieser Addition eine Modulo-Rechnung der Anzahl der Recheneinheiten (4) durchgeführt wird.

5. Verfahren zum Verwalten einer Datenbank, das das Verteilen der Daten der Datenbank auf eine Vielzahl von Rechengeräten (4) umfasst, mit den folgenden Schritten:
(a) jedem Rechengerät (4) einen Host-Index zuordnen,
(b) eine Vielzahl von indexierten Speicherplätzen auf dem Arbeitsspeicher jedes Rechengeräts (4) einrichten,
(c) mindestens einen Teil der Datenbankdaten in Chunks mit einem Chunk-Index einrichten,
(d) eine Vielzahl von voneinander unterschiedlichen Sequenzen bestimmen, die jeweils eine Vielzahl von Paaren umfassen, deren Anzahl gleich der Anzahl der Rechengeräte (4) ist, wobei jedes Paar einen einzigen Rangwert und einen Host-Index zuordnet,
(e) jeden Chunk einer Sequenz der Vielzahl von Sequenzen zuordnen, basierend auf der Liste der funktionalen Rechengeräte (4), in der Art und Weise, dass für zwei Chunks, die jeweils einen solchen ersten Chunk-Index und einen solchen zweiten Chunk-Index haben, dass die Differenz zwischen dem ersten Chunk-Index und dem zweiten Chunk-Index gleich der Anzahl von Sequenzen der Vielzahl von Sequenzen ist, eine gegebene Sequenz der Vielzahl von Sequenzen einem einzigen Chunk zugeordnet wird, dessen Chunk-Index zwischen dem ersten Chunk-Index und dem zweiten Chunk-Index liegt, durch
(e1) Bestimmen, für einen Chunk mit gegebenem Chunk-Index, aus der Liste der funktionalen Rechengeräte (4), eines Hauptspeicherplatzes auf dem Rechengerät (4), dessen Host-Index mit dem niedrigsten Rang in der dem gegebenen Chunk zugeordneten Sequenz verbunden ist, wobei der Hauptspeicherplatz auf dem Rechengerät (4) als der Speicherplatz gewählt wird, dessen Index dem gegebenen Chunk-Index entspricht,
(e2) Bestimmen, für einen Chunk mit gegebenem Chunk-Index, aus der Liste der funktionalen Rechengeräte (4), einer Vielzahl von Nebenspeicherplätzen, die auf Rechengeräten (4) so ausgewählt werden, dass die Summe der Ränge, die mit den Host-Indizes dieser Rechengeräte (4) in der mit dem gegebenen Chunk verbundenen Sequenz verbunden sind, minimal ist, wobei jeder Nebenspeicherplatz auf dem jeweiligen Rechengerät (4) als der Speicherplatz ausgewählt wird, dessen Index dem gegebenen Chunk-Index entspricht, und Bestimmen, unter der Vielzahl von Nebenspeicherplätzen eines Satzes von kritischen Nebenspeicherplätzen und eines Satzes von Toleranz-Nebenspeicherplätzen,
(f) die Daten jedes gegebenen Chunks auf dem zugehörigen Hauptspeicherplatz ablegen,
(g) die auf den Hauptspeicherplätzen abgelegten Daten auf die entsprechenden Nebenspeicherplätze replizieren, und
(h) das Schreiben eines Datums, das sich auf einen bestimmten Chunk bezieht, nur dann bestätigen, wenn der mit dem gegebenen Chunk verbundene Hauptspeicherplatz dieses Datum auf dem Satz von kritischen Nebenspeicherplätzen des gegebenen Chunks repliziert hat.

6. Verfahren nach Anspruch 5, wobei die Operation (e2) das Bestimmen einer Anzahl von Nebenspeicherplätzen umfasst, die kleiner ist als die Anzahl der Rechengeräte (4) minus eins.

7. Verfahren nach einem der Ansprüche 5 und 6, wobei die Schritte (d) und (e) durchgeführt werden:
- indem für jeden Chunk-Index ein Host-Index mit dem Chunk-Index modulo der Anzahl der Rechengeräte initialisiert wird, und
- durch Wiederholung einer Sequenz, so oft, wie die Anzahl der Rechengeräte, in der:
- wenn der Host-Index bereits mit dem Chunk-Index verknüpft ist, den Host-Index neu bestimmen, indem ihm eins addiert wird und an der sich ergebenden Anzahl eine Modulo-Rechnung Rechengeräten (4) durchgeführt wird, bis ein Host-Index gefunden wird, der nicht bereits mit dem Chunk-Index verknüpft ist,
- der Chunk-Index ist mit dem Host-Index und mit einem Rang verbunden, dessen Wert aus der Iteration der Sequenz stammt,
- der Host-Index neu bestimmt wird, indem ihm der Wert eins addiert wird und der Chunk-Index modulo des Ergebnisses der Subtraktion einer natürlichen Zahl von der Anzahl der Rechengeräte und am Ergebnis dieser Additionen eine Modulo-Rechnung der Anzahl der Rechengeräte (4) durchgeführt wird, wobei die natürliche Zahl für alle Wiederholungen der Sequenz gleich ist und so gewählt wird, dass die Anzahl der Rechengeräte (4) und die Anzahl der Rechengeräte (4) minus der natürlichen Zahl primär zueinander sind.

8. Verfahren nach einem der Ansprüche 5 bis 7, wobei Schritt (d) umfasst:
(d1) Bestimmen einer Vielzahl unterschiedlicher Paare, die einen Initialisierungsindex zwischen 0 und der Anzahl der Rechengeräte (4) und einen Pfadindex zwischen 1 und der Anzahl der Rechengeräte (4) minus eins zuordnen,
(d2) für jedes eindeutige Paar einen Host-Index mit dem Initialisierungsindex initialisieren und die folgenden Vorgänge so oft wiederholen, wie die Anzahl der Rechengeräte:
(d21) wenn der Host-Index bereits mit dem Chunk-Index verknüpft ist, den Host-Index neu bestimmen, indem ihm eins addiert wird und an der sich ergebenden Anzahl eine Modulo-Rechnung Rechengeräten (4) durchgeführt wird, bis ein Host-Index gefunden wird, der nicht bereits mit einem Rang verknüpft ist.
(d22) den Host-Index mit einem Rang verknüpfen, dessen Wert sich aus der Anzahl der Wiederholungen der Rechnung (d2) ergibt, die für das aktuelle eindeutige Paar bereits durchgeführt wurden,
(d23) den Host-Index neu bestimmen, indem ihm der Wert des Pfad-Indexes addiert wird und am Ergebnis dieser Addition eine Modulo-Rechnung der Anzahl der Rechengeräte (4) durchgeführt wird.

9. Computerprogrammprodukt, das Programmcodeteile zur Implementierung der Vorrichtung nach einem der Ansprüche 1 bis 5 oder des Verfahrens nach einem der Ansprüche 5 bis 8 umfasst, wenn das Programm auf einem Computer ausgeführt wird.

## Claims

1. A database system, comprising a plurality of computing devices (4) and an allocator (6) which is designed to distribute the data of the database over the computing devices (4), **characterized in that** the computing devices (4) are each designated by a host index and each comprise a random-access memory,
**in that** the allocator (6) is designed:
- to organize a plurality of spaces indexed over each random-access memory, and to organize a part at least of the data of the database into tranches having a tranche index,
- to define a plurality of mutually distinct sequences each comprising a plurality of pairs whose number is equal to the number of computing devices (4), each pair associating a unique rank value and a host index,
- to maintain a list of the functional computing devices (4) over time,
- to associate each tranche with a sequence of the plurality of sequences, on the basis of the list of functional computing devices (4), so that, for two tranches having respectively a first tranche index and a second tranche index such that the difference between the first tranche index and the second tranche index is equal to the number of sequences of the plurality of sequences, a given sequence of the plurality of sequences is associated with a single tranche whose tranche index lies between the first tranche index and the second tranche index,
- to define, for a tranche of given tranche index, from among the list of functional computing devices (4), a master space on the computing device (4) whose host index is associated with the lowest rank in the sequence associated with the given tranche, the master space being chosen on the computing device (4) as the space whose index corresponds to the given tranche index,
- to define, for a tranche of given tranche index, from among the list of functional computing devices (4), a plurality of slave spaces, chosen on computing devices (4) in such a way that the sum of ranks which are associated with the host indices of these computing devices (4) in the sequence associated with the given tranche is a minimum, each slave space being chosen on the respective computing device (4) as the space whose index corresponds to the given tranche index,
- to define, from among the plurality of slave spaces associated with a given tranche, a set of critical slave spaces and a set of tolerance slave spaces,
and **in that** the computing devices (4) are furthermore designed in such a way that a computing device (4) which receives a master space replicates the data of the associated tranche on the corresponding slave spaces, and confirms the writing of a datum relating to a given tranche solely when this datum has been replicated on the set of critical slave spaces of the given tranche.

2. The system as claimed in claim 1, in which the allocator (6) is designed to define a number of slave spaces which is less than the number of computing devices (4) minus one.

3. The system as claimed in claim 1, in which the allocator (6) is designed to define the plurality of distinct sequences and to associate each tranche with a sequence of the plurality of sequences by initializing, for each tranche index, a host index with the tranche index modulo the number of computing devices, and by repeating as many times as the number of computing devices a sequence in which:
- if the host index is already associated with the tranche index, redefine the host index by adding one to it and by carrying out on the number obtained an operation modulo the number of computing devices (4), until a host index is found which is not already associated with the tranche index,
- the tranche index is associated with the host index, and with a rank whose value is derived from the iteration of the sequence,
- the host index is redefined by adding to it the value one as well as the tranche index modulo the result of the subtraction of a natural integer from the number of computing devices, and by carrying out on the result of these additions an operation modulo the number of computing devices (4), said natural integer being the same for all the repetitions of the sequence and chosen so that the number of computing devices (4) and the number of computing devices (4) minus said natural integer are mutually prime.

4. The system as claimed in one of claims 1 to 3, in which the allocator (6) is designed to define the plurality of distinct sequences on the basis of a plurality of distinct pairs associating an initialization index lying between 0 and the number of computing devices (4), and a traversal index lying between 1 and the number of computing devices (4) minus one, each distinct sequence being generated initializing a host index with the initialization index, and by repeating as many times as the number of computing devices (4) a sequence in which:
- if the host index is already associated with the tranche index, redefine the host index by adding one to it and by carrying out on the number obtained an operation modulo the number of computing devices (4), until a host index is found which is not already associated with a rank,
- the host index is associated with a rank whose value is derived from the iteration of the sequence,
- the host index is redefined by adding the value of the traversal index to it, and by carrying out on the result of this addition an operation modulo the number of computing devices (4).

5. A database management method, comprising the distributing of the data of the database over a plurality of computing devices (4), comprising the following operations:
(a) associating a host index with each computing device (4),
(b) organizing a plurality of spaces indexed on the random-access memory of each computing device (4),
(c) organizing a part at least of the data of the database into tranches having a tranche index,
(d) defining a plurality of mutually distinct sequences each comprising a plurality of pairs whose number is equal to the number of computing devices (4), each pair associating a unique rank value and a host index,
(e) associating each tranche with a sequence of the plurality of sequences, on the basis of the list of functional computing devices (4), so that, for two tranches having respectively a first tranche index and a second tranche index such that the difference between the first tranche index and the second tranche index is equal to the number of sequences of the plurality of sequences, a given sequence of the plurality of sequences is associated with a single tranche whose tranche index lies between the first tranche index and the second tranche index, by
(e1) defining, for a tranche of given tranche index, from among the list of functional computing devices (4), a master space on the computing device (4) whose host index is associated with the lowest rank in the sequence associated with the given tranche, the master space being chosen on the computing device (4) as the space whose index corresponds to the given tranche index,
(e2) defining, for a tranche of given tranche index, from among the list of functional computing devices (4), a plurality of slave spaces, chosen on computing devices (4) in such a way that the sum of ranks which are associated with the host indices of these computing devices (4) in the sequence associated with the given tranche is a minimum, each slave space being chosen on the respective computing device (4) as the space whose index corresponds to the given tranche index, and, from among the plurality of slave spaces, defining a set of critical slave spaces and a set of tolerance slave spaces,
(f) storing the data of each given tranche on the master space which is associated therewith,
(g) replicating the data stored on the master spaces on the corresponding slave spaces, and
(h) confirming the writing of a datum relating to a given tranche solely when the master space associated with the given tranche has replicated this datum on the set of critical slave spaces of the given tranche.

6. The method as claimed in claim 5, in which the operation (e2) comprises the defining of a number of slave spaces which is less than the number of computing devices (4) minus one.

7. The method as claimed in one of claims 5 and 6, in which the operations (d) and (e) are carried out:
- by initializing, for each tranche index, a host index with the tranche index modulo the number of computing devices, and
- by repeating as many times as the number of computing devices a sequence in which:
- if the host index is already associated with the tranche index, redefine the host index by adding one to it and by carrying out on the number obtained an operation modulo the number of computing devices (4), until a host index is found which is not already associated with the tranche index,
- the tranche index is associated with the host index, and with a rank whose value is derived from the iteration of the sequence,
- the host index is redefined by adding to it the value one as well as the tranche index modulo the result of the subtraction of a natural integer from the number of computing devices, and by carrying out on the result of these additions an operation modulo the number of computing devices (4), said natural integer being the same for all the repetitions of the sequence and chosen so that the number of computing devices (4) and the number of computing devices (4) minus said natural integer are mutually prime.

8. The method as claimed in one of claims 5 to 7, in which the operation (d) comprises:
(d1) defining a plurality of distinct pairs associating an initialization index lying between 0 and the number of computing devices (4), and a traversal index lying between 1 and the number of computing devices (4) minus one,
(d2) for each distinct pair, initializing a host index with the initialization index, and repeating as many times as the number of computing devices the following operations:
(d21) if the host index is already associated with the tranche index, redefine the host index by adding one to it and by carrying out on the number obtained an operation modulo the number of computing devices (4), until a host index is found which is not already associated with a rank,
(d22) associate the host index with a rank whose value is derived from the number of repetitions of the operation (d2) that have already been carried out for the current distinct pair,
(d23) redefine the host index by adding the value of the traversal index to it, and by carrying out on the result of this addition an operation modulo the number of computing devices (4).

9. A computer program product comprising program code portions for implementing the device as claimed in one of claims 1 to 5 or the method as claimed in one of claims 5 to 8 when said program is executed on a computer.
